# FASCICULE DE BREVET EUROPEEN

(11) **EP 1 711 335 B1**
(45) Date de publication et mention de la délivrance du brevet: **06.08.2008**
(21) Numéro de dépôt: 05701104.1
(22) Date de dépôt: 21.01.2005
(51) Int. Cl.: B29C 70/32, B29D 30/16

(54) **PROCEDE ET DISPOSITIF POUR LA FABRICATION D'UN RENFORCEMENT POUR PNEUMATIQUE**
VERFAHREN UND VORRICHTUNG ZUR HERSTELLUNG EINER REIFENVERSTÄRKUNG
METHOD AND DEVICE FOR PRODUCING A TYRE REINFORCEMENT

(30) Priorité: 27.01.2004 FR 0400809
(43) Date de publication de la demande: 18.10.2006
(73) Titulaire: Société de Technologie Michelin, 63000 Clermont-Ferrand (FR); Michelin Recherche et Technique S.A., 1463 Granges-Paccot (CH)
(72) Inventeur: MARTIN, Pascal, F-63730 Corent (FR); BERNARD, Christian, F-63430 Pont du Château (FR)
(74) Mandataire: Lasson, Cédric Y. M.
(86) Numéro de dépôt international: PCT/EP2005/000583
(87) Numéro de publication internationale: WO 2005/075180

(56) Documents cités:
- US-A- 3 894 906
- US-A- 4 952 259
- US-A- 5 281 289

## Description

### DOMAINE DE L'INVENTION

La présente invention concerne la fabrication des pneumatiques. Plus précisément, elle se rapporte à la fabrication des armatures de renforcement de sommet que l'on trouve dans les pneumatiques à ceinture et à carcasse le plus souvent radiale.

### ETAT DE LA TECHNIQUE

Par le brevet US 4 952 259, l'état de l'art connaît une technique permettant de fabriquer de tels renforcements non plus sous forme de produits semi-finis appelés "nappes", préparés à plat, que l'on incorpore par la suite lors de l'assemblage du pneumatique, mais directement sur le pneumatique en cours de fabrication, et à partir d'une seule bobine de fil. Cette proposition, qui est basée sur la projection d'un fil à la manière de la lanière d'un fouet, permet de balayer les angles courants des fils dans les nappes dites de sommet ; elle permet aussi de fabriquer des renforcements de carcasse radiale, ou des renforcements de taille moins étendue. Cependant, pour ces derniers, plus la taille du fil est petite, plus il est problématique de mettre en oeuvre cette technique.

Le brevet US 5 281289 décrit une méthode et un dispositif dans lequel des tronçons de fil sont appliqués sur un noyau par un bras oscillant décrivant un mouvement orbital alternatif autour du noyau. Les tronçons sont détachés par l'action d'un dispositif rotatif de coupe situé en amont des moyens d'acheminement et d'application. Le fil est acheminé vers le noyau par l'intermédiaire d'un guidage statique.

L'objectif de la présente invention est de proposer une technique de fabrication tout particulièrement adaptée à la réalisation de renforts dans lesquels les fils sont longueur relativement modeste, en particulier (mais non limitativement) pour la fabrication de renforts dans les bourrelets de pneumatiques ou dans la partie radialement intérieure des flancs, par dépose de tronçons de petites longueurs de façon adjacente sur un support, et ce quel que soit l'angle que forme le fil de ces renforts (un angle de 90° étant celui d'un fil inclus dans un plan comprenant l'axe de rotation du pneumatique, selon les conventions bien connues dans ce domaine).

### BREVE DESCRIPTION DE L'INVENTION

L'invention propose un procédé selon la revendication 1.

Une utilisation privilégiée du procédé décrit ci-dessus consiste à fabriquer un renforcement lors de la fabrication d'un pneumatique construit progressivement sur ledit support, celui-ci étant de révolution et monté rotatif autour d'un axe, en empilant les différents constituants du pneumatique dans l'ordre et à la place requise par l'architecture dudit pneumatique. Par exemple, on peut fabriquer un renforcement situé dans un flanc du pneumatique, ou encore situé dans un bourrelet du pneumatique.

Plus particulièrement, l'invention propose d'appliquer ce procédé à la fabrication d'un renforcement lors de la fabrication d'un pneumatique construit progressivement sur ledit support, celui-ci étant de révolution et monté rotatif autour d'un axe, en empilant les différents constituants du pneumatique dans l'ordre et à la place requise par l'architecture dudit pneumatique. Par exemple, le support est de forme sensiblement toroïdale, d'allure proche de la cavité interne du pneumatique.

On entend par "fabrication d'un pneumatique" une fabrication complète ou encore une fabrication partielle, consistant par exemple à fabriquer un flanc dont au moins les renforcements sont fabriqués selon le procédé de l'invention.

Le terme "fil" doit bien entendu être compris dans un sens tout à fait général, englobant un monofilament, un multifilament, un câble ou un retors ou un assemblage équivalent, et ceci quelle que soit la matière constituant le fil ou le traitement qu'il a subi, par exemple un traitement de surface pour favoriser son adhésion sur le support ou sa liaison intime avec du caoutchouc.

Lorsque l'on parle plus spécifiquement d'un tronçon de fil, on désigne plus précisément le morceau de fil individualisé par coupe, c'est à dire une longueur de fil entre deux extrémités coupées. Il s'agit cependant d'un procédé fabriquant les renforcements à partir d'un seul fil, donc conçu pour utiliser en continu du fil fourni par exemple par une bobine, et qui réalise un renforcement (une nappe dans la terminologie courante).

Le support dont il est question peut être à la forme de la surface de la cavité interne du pneumatique, ou proche de celle-ci. Ce peut être un noyau métallique rigide démontable. Mais cela pourrait aussi être une membrane gonflable armée, comme on en trouve dans les tambours de fabrication des pneumatiques. Cela pourrait être aussi un noyau sur lequel on fabrique un bloc sommet. Pour que le fil posé adhère sur le support, il suffit par exemple que celui-ci soit revêtu d'une couche de caoutchouc. Lorsque l'on utilise un noyau métallique comme support, il est préférable de vulcaniser ensuite le pneumatique sur celui-ci, pour faciliter l'extraction du noyau hors du pneumatique.

L'invention propose également un dispositif de fabrication d'un renforcement selon la revendication 12.
Le dispositif permet la fabrication d'un semi fini comme une nappe utilisée classiquement dans l'industrie du pneumatique. Mais il est également tout particulièrement utile lorsqu'il est intégré dans un appareil de fabrication d'un pneumatique, ledit appareil étant destiné à fabriquer un renforcement constitué à partir d'un fil délivré en continu et à la demande par une alimentation approprié, ledit appareil comprenant :
● un bâti ;
● un noyau de révolution constituant le support sur lequel on construit progressivement ledit renforcement en déposant des tronçons dudit fil ;
● un dispositif tel qu'exposé ci-dessus ;
● un manipulateur de présentation au noyau du dispositif, ladite structure étant montée sur ledit organe ;
● des moyens pour entraîner en rotation la partie centrale du dispositif à une vitesse de rotation contrôlée ;
● un organe de motorisation du fil capable d'imprimer au fil une avance linéaire à vitesse contrôlée ;
● des moyens pour entraîner en rotation le noyau, à une vitesse de rotation contrôlée.

On remarquera que l'axe de rotation du distributeur rotatif est positionné à l'extérieur de et face à la surface de réception sur le noyau.

### BREVE DESCRIPTION DES FIGURES

Tous les détails de réalisation de l'invention sont expliqués dans la suite, avec l'aide des figures jointes :
La figure 1 est une perspective montrant les aspects principaux de l'invention.
La figure 2 est une autre vue en élévation, selon la flèche II à la figure 1.
Les figures 3 à 7 suivantes montrent différents stades successifs du fonctionnement de l'invention.

### DESCRIPTION DU MEILLEUR MODE DE REALISATION DE L'INVENTION

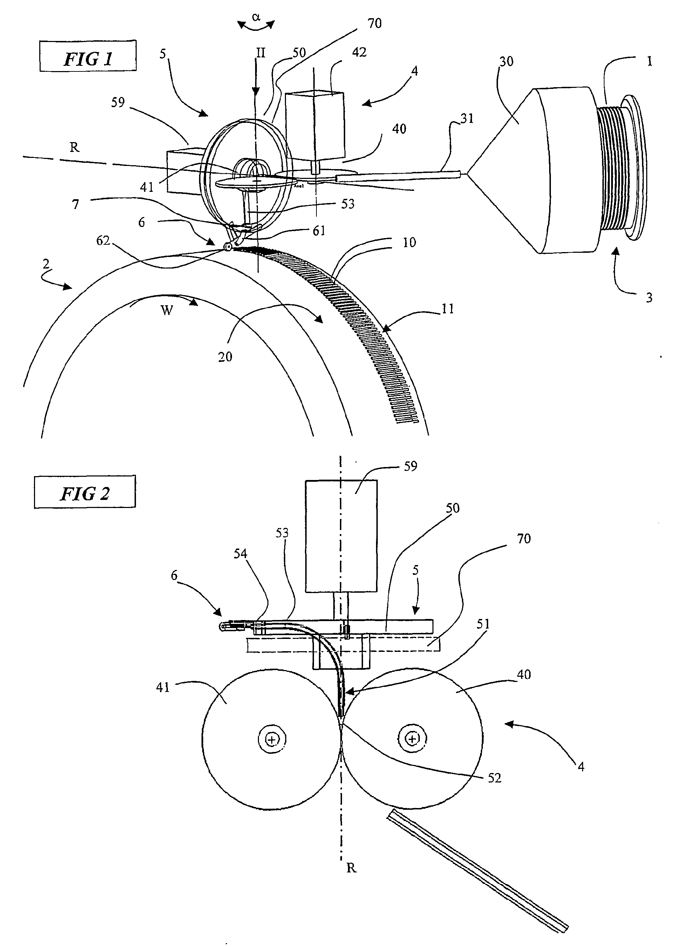

A la figure 1, on aperçoit un noyau 2 destiné à définir la surface de la cavité interne d'un pneumatique. Le noyau 2 est revêtu notamment de caoutchouc 20 dont la surface visible constitue une surface de réception sur laquelle on dépose des tronçons 10 de fil 1 au moyen d'un dispositif selon l'invention. Le caoutchouc 20 recouvrant le noyau 2 permet de retenir les tronçons 10 de fil sur le noyau 2 au fur et à mesure de leur dépose, par collage. Ensemble, les tronçons 10 de fil forment un renforcement 11. Les tronçons 10 de fil formant un angle α par rapport à l'orientation du renforcement. On constate à la figure 1 que l'orientation générale du renforcement est ici circonférentielle, c'est à dire que le renforcement forme une figure géométrique allongée dont la plus grande dimension est parallèle à un plan perpendiculaire à l'axe de rotation du futur pneumatique. On constate aussi que l'angle que forment les tronçons de fil 10 par rapport à l'orientation du renforcement est d'environ 90° (En fait, la référence par rapport à laquelle on mesure l'angle de chaque tronçon,est la référence classique selon laquelle on mesure les angles dans le domaine technique du pneumatique). Bien entendu, pour plus de clarté, soulignons une dernière fois que ces orientations et ces angles, et en particulier l'angle de 90° évoqué ci-dessus, ne sont nullement limitatifs.

Le support illustrant la présente invention définit la forme intérieure de fabrication du pneumatique. C'est par exemple un noyau 2 rigide et démontable, sur lequel on construit progressivement un pneumatique, sans toutefois que ceci soit limitatif. Ce support peut prendre bien d'autres aspects car l'invention trouve aussi à s'appliquer pour réaliser des semi-finis utilisés dans la fabrication des pneumatiques selon des procédés conformants. Le support peut en fait pratiquement être quelconque, par exemple ce peut être un tapis roulant.

A la figure 1, on voit une bobine 3 de fil 1 permettant l'alimentation du dispositif de pose du fil. On voit un organe d'entraînement 4 du fil 1. Le fil 1 passe au travers d'une sorte d'entonnoir 30 avant de rejoindre une goulotte 31. Ceci constitue une alimentation de fil, en aval de laquelle on trouve un organe d'entraînement 4 du fil essentiellement formé d'une paire de galets 40, 41 contra-rotatifs. Au moins l'un des galets 40, 41 est entraîné en rotation par un moteur 42.

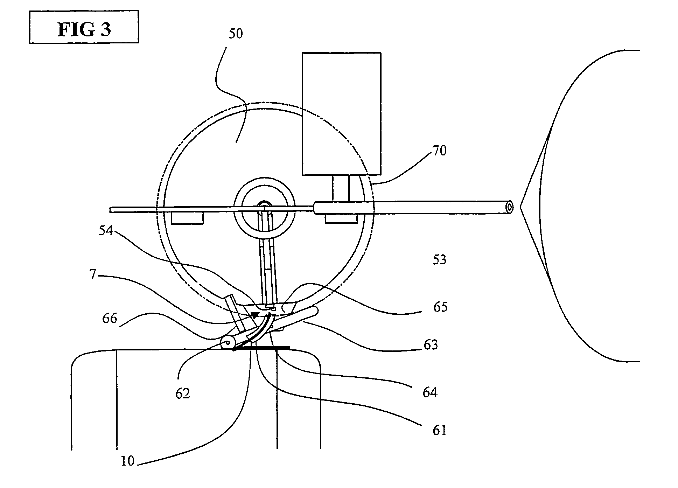

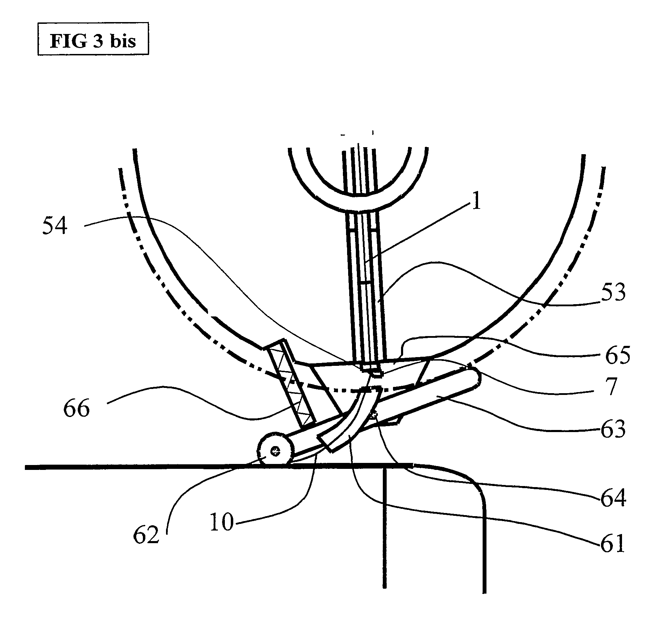

En aval de l'organe d'entraînement 4, on trouve un ensemble comportant un distributeur rotatif 6 et un organe d'acheminement 5 au distributeur rotatif 6. Celui-ci et l'organe d'acheminement 5 au distributeur sont agencés de façon à ce que leurs organes fonctionnels soient sensiblement dans le même plan perpendiculaire à l'axe de rotation du distributeur rotatif 6, avec un espace dans la direction radiale entre les deux. L'espace est prévu pour insérer un couteau 7 entre le distributeur rotatif 6 et l'organe d'acheminement 5. L'organe d'acheminement 5 du fil coopère avec le couteau 7 (que l'on aperçoit mieux à la figure 3), qui est monté sur un porte-couteau 70. Dans cet exemple de réalisation, l'organe d'acheminement 5 et le distributeur 6 sont accouplés et tous deux rotatifs, le couteau 7 étant monté sur un porte-couteau 70 rotatif à des fins de réglage seulement et dont la rotation peut être bloquée pendant la coupe.

L'organe d'acheminement 5 comporte différents éléments montés, dans cet exemple de réalisation, sur un disque 50 rotatif autour de l'axe de rotation R. Le disque n'est qu'une disposition constructive parmi d'autres. Le disque 50 est entraîné en rotation par un moteur 59. A l'intérieur du disque 50 est aménagé un tube central 51 dont un orifice d'entrée 52 est disposé sensiblement sur l'axe de rotation R. Le tube central 51 comporte une portion tubulaire finale 53 sensiblement perpendiculaire à l'axe de rotation, la portion tubulaire 53 venant en prolongation du tube central 51. La portion tubulaire finale 53 comporte, à son extrémité radialement extérieure, un orifice 54.

Enfin, le distributeur rotatif 6 est attaché au disque 50. On a vu que ce distributeur rotatif 6 comporte essentiellement un déflecteur permettant d'infléchir la trajectoire du fil 1 poussé hors de la portion tubulaire finale 53. Le déflecteur forme un couloir de réception du fil du côté radialement intérieur et il forme un guidage en sortie du déflecteur du côté radialement extérieur. Ce déflecteur est ici matérialisé par un tube coudé 61. Le distributeur rotatif 6 est monté sur le disque 50. Il tourne donc exactement comme la portion tubulaire finale 53. Il est monté de façon à ce que le tube coudé 61 soit en regard de la portion tubulaire finale 53. Ledit un espace est aménagé, dans la direction radiale, entre le distributeur rotatif 6 et la portion tubulaire finale 53 de l'organe d'acheminement 5.

La présentation de l'ensemble est faite de façon à ce que la surface de réception (ici le caoutchouc 20 recouvrant le noyau 2) sur laquelle on va déposer des tronçons de fil soit proche de la trajectoire du fil guidé par le déflecteur en sa sortie, lorsque le distributeur rotatif est mis en rotation, et de façon à ce que l'axe de rotation du distributeur rotatif forme un angle perpendiculaire à l'angle de dépose souhaité pour les tronçons sur le support.

En outre, le distributeur rotatif 6 comporte encore un applicateur constitué dans cet exemple de réalisation par un galet rotatif 62. On peut remplacer ce galet rotatif par une pièce fixe du genre d'un ski. Le galet rotatif 62 est monté à l'extrémité d'un bras 63, lui-même articulé en 64 sur une chape 65 solidaire du disque 50. Un ressort 66 (ou n'importe quel dispositif offrant une fonction ressort) tend à éloigner le galet 62 du disque 50. On peut remplacer ce mécanisme comportant un ressort par une commande desmodromique de la position du galet rotatif 62 (ou de la pièce substitutive). On peut utiliser par exemple une commande par came ou un actuateur électrique contrôlé par pilotage actif.

Le porte-couteau 70 est donc réglable en rotation autour de l'axe de rotation R pour ajuster la position de coupe par le couteau 7. Le couteau 7 est par ailleurs monté de façon à s'intercaler dans l'espace entre la portion tubulaire 53 et le tube coudé 61, et de façon à coopérer avec l'extrémité radiale de la portion tubulaire 53 pour exécuter une coupe franche.

Le fonctionnement est le suivant. Le fil 1 est pincé entre les galets 40, 41, afin de lui imprimer un mouvement d'avance bien déterminé. Le fil 1 est ensuite introduit dans l'organe d'acheminement 5, par son orifice d'entrée 52. A chaque tour du disque 50, le fil est présenté au couteau 7 immobile dans l'espace. Donc, à chaque tour du disque 50 et puisque le couteau 7 est immobile dans l'espace, le fil est coupé et un tronçon 10 est libéré. Au moment où le couteau 7 sectionne le fil, celui-ci se trouve immobilisé un très bref instant. Il convient donc que le tube central puisse contenir momentanément la quantité de fil qui continue à être propulsé par les galets 40, 41.

Si l'organe d'acheminement 5 est en rotation alors que l'organe d'entraînement 4 est immobile, au premier tour du disque 50, le fil est coupé à fleur de l'orifice 54 puis plus rien ne se passe. Dès que l'on impose une certaine avance au fil 1 en commandant de façon appropriée la rotation des galets 40, 41, à chaque tour du disque 50 va sortir une certaine longueur de fil 1 au-delà de l'orifice 54. Cette certaine longueur détermine la longueur des tronçons 10. A chaque tour du disque 50, un tronçon 10 est libéré.

Chaque tronçon 10 est guidé par le tube coudé 61 jusqu'à la surface de réception sur laquelle il est ainsi déposé. Le tube coudé 61 permet de recevoir les tronçons 10 de fil au fur et à mesure que le fil est coupé par le couteau 7.

De par la forme coudée du tube coudé 61, l'orientation prise par le fil 1 est progressivement changée depuis une orientation radiale par rapport à l'axe de rotation R en une orientation sensiblement perpendiculaire à ladite orientation radiale, avant d'être déposé sur la surface du noyau 2. Bien entendu, le noyau 2 est lui-même entraîné en rotation par tout dispositif convenable, non représenté, dans le sens indiqué par la flèche W.

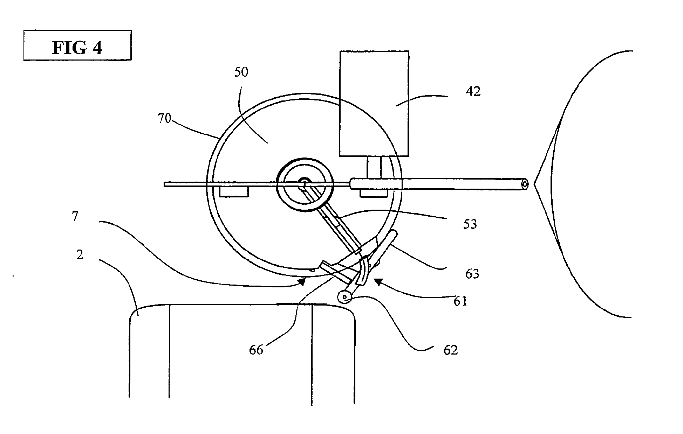

On va maintenant décrire plus en détails le cycle de création d'un tronçon 10 à partir du moment où l'orifice 54 vient de dépasser le couteau 7, ce qui est la position illustrée à la figure 1, 3 ou 3bis. Juste après ce moment, l'extrémité libre du fil 1 a commencé de sortir de l'orifice 54 et est entrée dans le tube coudé 61. Pendant la rotation du disque, le fil 1 continue de sortir. On peut consulter la figure 4. Pendant la poursuite de la rotation du disque, le fil 1 prend une attitude imposée par la forme du tube coudé.

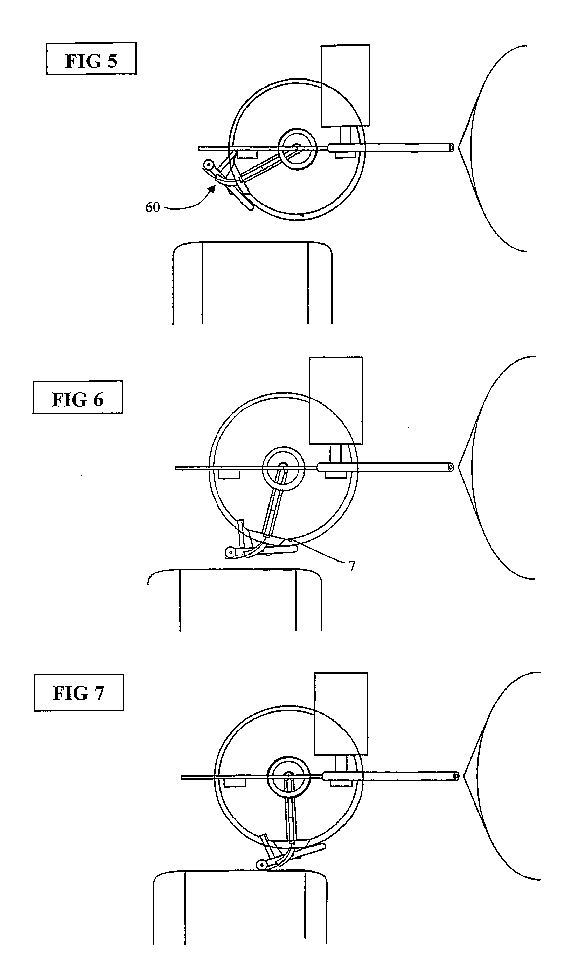

On peut consulter la figure 5. A la figure 6, le disque a effectué une rotation complète et s'approche du couteau 7. On voit que, avant d'être coupée, l'extrémité libre du fil 1 a rejoint la surface du noyau 2 et est pincée entre le galet 63 et le noyau 2. La figure 7 ne diffère de la figure 6 que par quelques degrés d'angle du disque 50 dont le mouvement a continué à faire avancer l'orifice 54 tout près du couteau 7. A la figure 7, le fil frappe le couteau 7 ce qui permet de le sectionner, et le cycle recommence.

A la figure 3 ou au zoom sur la partie adjacente au support que constitue la figure 3bis, on voit que le fil sectionné forme maintenant un tronçon 10 qui continue d'être appliqué sur le noyau 2 par le galet 62. La figure 1 montre de nombreux tronçons 10 appliqués sur le noyau 2.

Les différentes caractéristiques du renforcement fabriqué au moyen du dispositif selon l'invention sont la longueur des tronçons et l'angle de dépose des tronçons par rapport à la direction principale du renforcement. La longueur de chaque tronçon 10 est ajustée en adaptant de façon appropriée la vitesse relative de l'organe d'entraînement 4 (ce qui règle la vitesse linéaire imprimée au fil) par rapport à la vitesse de rotation de l'organe d'acheminement 5. Pour une vitesse de rotation de l'organe d'acheminement 5 donnée, plus la vitesse de rotation des galets 40, 41 est importante, plus les tronçons 10 seront de longueur importante, et inversement.

Quant à l'orientation des tronçons 10, on l'ajuste en agissant sur l'angle α (voir figure 1) de présentation du dispositif de dépose lui-même par rapport au mouvement de la surface sur laquelle on dépose les tronçons de fil. Si le mouvement de la surface de dépose est orienté perpendiculairement au plan du disque 50, comme c'est le cas dans l'exemple illustrant l'invention, les tronçons 10 forment un angle de 90° par rapport à la direction générale du renforcement. La direction d'avance du noyau 2 peut former un angle inférieur à 90° par rapport au plan du disque 50.

## Revendications

1. Procédé de fabrication d'un renforcement comportant des tronçons (10) de fil de renforcement (1) adjacents noyés dans une matrice élastomérique (20), procédé dans lequel :
● on recouvre de ladite matrice élastomérique une surface de réception sur un support (2);
● on présente en regard de la surface de réception du support un ensemble comportant un distributeur rotatif (6) et un organe d'acheminement (5) au distributeur, l'organe d'acheminement étant rotatif et comprenant une portion tubulaire (53) finale sensiblement perpendiculaire à l'axe de rotation du distributeur rotatif, le distributeur comportant au moins un déflecteur (61), le déflecteur formant un couloir de réception du fil du côté radialement intérieur et formant un guidage en sortie du déflecteur du côté radialement extérieur, un espace étant aménagé, dans la direction radiale, entre le distributeur rotatif et la portion tubulaire finale de l'organe d'acheminement, la présentation étant faite de façon à ce que la surface de réception soit proche de la trajectoire du guidage en sortie du déflecteur lorsque le distributeur rotatif est mis en rotation, et de façon à ce que l'axe de rotation du distributeur rotatif forme un angle perpendiculaire à l'angle de dépose souhaité pour les tronçons sur le support ;
● on entraîne en rotation le distributeur rotatif (6) et l'organe d'acheminement (5), à une vitesse de rotation contrôlée ;
● on fait défiler la surface de réception par rapport au distributeur rotatif ;
● on introduit le fil, à vitesse linéaire contrôlée, dans l'organe d'acheminement (5) en l'enfilant dans la portion tubulaire (53);
● on fait agir un couteau (7) dans l'espace entre la portion tubulaire (53) et le distributeur (6), de sorte que le couteau permet de prélever un tronçon (10) de fil, ledit tronçon étant guidé jusqu'à et déposé à la surface de réception par ledit au moins un déflecteur (61).

2. Procédé selon la revendication 1, dans lequel l'axe de rotation du distributeur rotatif est positionné à l'extérieur de et face à la surface de réception.

3. Procédé selon la revendication 2 dans lequel la surface de réception est une surface de révolution.

4. Procédé selon la revendication 1, dans lequel le déflecteur est un tube coudé (61).

5. Procédé selon la revendication 1, dans lequel l'organe d'acheminement et le distributeur sont accouplés, le couteau étant maintenu immobile pendant la coupe.

6. Procédé selon la revendication 1, dans lequel le couteau prélève un tronçon de fil à chaque tour du distributeur rotatif.

7. Procédé selon l'une des revendications 3 à 6, utilisé pour fabriquer un renforcement lors de la fabrication d'un pneumatique construit progressivement sur ledit support, celui-ci étant monté rotatif autour d'un axe, en empilant les différents constituants du pneumatique dans l'ordre et à la place requise par l'architecture dudit pneumatique.

8. Procédé selon la revendication 7, utilisé pour fabriquer un renforcement situé dans un flanc du pneumatique.

9. Procédé selon la revendication 7, utilisé pour fabriquer un renforcement situé dans un bourrelet du pneumatique.

10. Procédé selon l'une des revendications 7 à 9, dans lequel le support est de forme sensiblement toroïdale, d'allure proche de la cavité interne du pneumatique.

11. Procédé selon l'une des revendications 1 à 10, **caractérisé en ce que** la longueur des tronçons est réglée en adaptant de façon appropriée la vitesse linéaire imprimée au fil.

12. Dispositif de fabrication d'un renforcement à base de tronçons (10) de fil de renforcement (1) destinés à être déposés sur une surface de réception, le dispositif comportant :
● un distributeur rotatif (6) en rotation autour d'un axe de rotation (R), le distributeur rotatif comportant au moins un déflecteur (61), le déflecteur formant un couloir de réception du fil du côté radialement intérieur et formant un guidage en sortie du côté radialement extérieur ;
● un organe (5) d'acheminement au distributeur, l'organe d'acheminement (5) étant rotatif et comprenant une portion tubulaire (53) finale sensiblement perpendiculaire à l'axe de rotation (R) du distributeur rotatif, un espace dans le sens radial étant aménagé entre la portion tubulaire (53) finale et le distributeur rotatif ;
● un couteau (7) disposé dans l'espace entre le distributeur rotatif et l'organe d'acheminement.

13. Dispositif selon la revendication 12, dans lequel l'organe d'acheminement et le distributeur sont accouplés, le couteau (7) étant monté sur un porte-couteau (70) rotatif à des fins de réglage et dont la rotation peut être bloquée pendant la coupe.

14. Dispositif selon la revendication 12 ou 13, dans lequel le déflecteur est un tube coudé (61).

15. Dispositif selon l'une des revendications 12 ou 13, dans lequel le distributeur rotatif comprend un tube central (51) dont un orifice d'entrée (52) est disposée sensiblement sur l'axe de rotation (R) du distributeur rotatif, la portion tubulaire (53) venant en prolongation du tube central (51).

16. Dispositif selon l'une des revendications 12 à 15, comportant un applicateur solidaire du distributeur rotatif (6).

17. Dispositif selon la revendication 16, dans lequel l'applicateur est monté à l'extrémité d'un bras (63), lui-même articulé sur une chape (65) solidaire du distributeur rotatif.

18. Dispositif selon la revendication 16 ou 17, dans lequel l'applicateur est un galet rotatif (63).

19. Dispositif selon l'une des revendications 16 à 17, dans lequel un ressort (66) tend à éloigner l'applicateur du distributeur rotatif

20. Dispositif selon la revendication 15, dans lequel le tube central (51) est aménagé à l'intérieur d'un disque (50) rotatif, en rotation autour de l'axe de rotation (R).

## Claims

1. A method of manufacturing a reinforcement comprising adjacent sections (10) of reinforcement wire (1) embedded in an elastomer matrix (20), a method in which:
● a reception surface on a support (2) is covered with the said elastomeric matrix;
● an assembly comprising a rotary distributor (6) and a member (5) conveying to the distributor is presented in front of the reception surface of the support, the conveying member being rotary and comprising a final tubular portion (53) substantially perpendicular to the rotation axis of the rotary distributor, the distributor comprising at least one deflector (61), the deflector forming a corridor receiving the wire on the radially internal side and forming a guide at the exit from the deflector on the radially external side, a space being provided, in the radial direction, between the rotary distributor and the final tubular portion of the conveying member, the presentation being made so that the reception surface is close to the guidance path at the exit from the deflector when the rotary distributor is rotated, and so that the rotation axis of the rotary distributor forms an angle perpendicular to the deposition angle required for the sections on the support;
● the rotary distributor (6) and the conveying member (5) is driven in rotation, at a controlled rotation speed;
● the reception surface is made to travel with respect to the rotary distributor;
● the wire is introduced, at a controlled linear speed, into the conveying member, threading it into the tubular portion;
● a knife is made to act in the space between the tubular portion and the distributor, so that the knife makes it possible to take off a section of wire, the said section being guided as far as and deposited on the reception surface by the said at least one deflector.

2. Method according to claim 1, in which the rotation axis of the rotary distributor is positioned outside and facing the reception surface.

3. Method according to claim 2, in which the reception surface is a surface of revolution.

4. Method according to claim 3, in which the deflector is an elbowed tube (61).

5. Method according to claim 1, in which the conveying member and the distributor are coupled, the knife being kept immobile during the cutting.

6. Method according to claim 1, in which the blade takes off a section of wire at each turn of the rotary distributor.

7. Method according to one of claims 3 to 6, used for manufacturing a reinforcement during the manufacture of a tyre constructed progressively on the said support, the latter being mounted so as to rotate about an axis, stacking the various constituents of the tyre in order and in the place required by the architecture of the said tyre.

8. Method according to claim 7, used for manufacturing a reinforcement situated in a sidewall of the tyre.

9. Method according to claim 7, used for manufacturing a reinforcement situated in a bead of the tyre.

10. Method according to one of claims 7 to 9, in which the support is substantially toroidal in form, with a shape similar to the internal cavity of the tyre.

11. Method according to one of claims 1 to 10, **characterised in that** the length of the sections is adjusted by appropriately adapting the linear speed imparted to the wire.

12. Device for manufacturing a reinforcement based on sections (1° of reinforcement wire (1) intended to be deposited on a reception surface, the device comprising:
● a rotary distributor (6) in rotation about a rotation axis (R), the rotary distributor comprising at least one deflector (61), the deflector forming a corridor receiving the wire on the radially internal side and forming a guidance at the exit on the radially external side;
● a member (5) conveying to the distributor, the conveying member being rotary and comprising a final tubular portion (53) substantially perpendicular to the rotation axis (R) of the rotary distributor, a space in the radial direction being provided between the final tubular portion (53) and the rotary distributor;
● a knife (7) disposed in the space between the rotary distributor and the conveying member.

13. Device according to claim 12, in which the conveying member and the distributor are coupled, the knife (7) being mounted on a rotary knife holder (70) for purposes of adjustment, and whose rotation can be locked during cutting.

14. Device according to claim 12 or 13, in which the deflector is an elbowed tube (61).

15. Device according to one of claims 12 or 13, in which the rotary distributor comprises a central tube (51), an inlet orifice (52) of which is disposed substantially on the rotation axis (R) of the rotary distributor, the tubular portion (53) coming in line with the central tube (51).

16. Device according to one of claims 12 to 15, comprising an applicator fixed to the rotary distributor (6).

17. Device according to claim 16, in which the applicator is mounted at the end of an arm (63), itself articulated on a fork joint (65) fixed to the rotary distributor.

18. Device according to claim 16 or 17, in which the applicator is a rotary roller (63).

19. Device according to one of claims 16 to 17, in which a spring (66) tends to move the applicator away from the rotary distributor.

20. Device according to claim 15, in which the central tube (51) is provided inside a rotary disc (50), in rotation about the rotation axis (R).

## Patentansprüche

1. Verfahren zur Herstellung einer Verstärkung, die benachbarte Abschnitte (10) von Verstärkungsdraht (1) aufweist, die in eine Elastomermatrix (20) eingebettet sind, Verfahren, bei dem:
● eine Aufnahmefläche auf einem Träger (2) mit der Elastomermatrix bedeckt wird;
● gegenüber der Aufnahmefläche des Trägers eine Einheit angeordnet wird, die einen Drehverteiler (6) und ein Organ (5) zur Beförderung zum Verteiler aufweist, wobei das Beförderungsorgan drehbar ist und einen rohrförmigen Endteil (53) aufweist, der im Wesentlichen lotrecht zur Drehachse des Drehverteilers liegt, wobei der Verteiler mindestens ein Umlenkblech (61) aufweist, wobei das Umlenkblech einen Aufnahmedurchgang für den Draht auf der radial inneren Seite bildet und eine Führung am Ausgang des Umlenkblechs auf der radial äußeren Seite bildet, wobei ein Zwischenraum in radialer Richtung zwischen dem Drehverteiler und dem rohrförmigen Endteil des Beförderungsorgans eingerichtet ist, wobei die Anordnung derart erfolgt, dass die Aufnahmefläche nahe der Bahn der Führung am Ausgang des Umlenkblechs ist, wenn der Drehverteiler in Drehung versetzt wird, und derart erfolgt, dass die Drehachse des Drehverteilers einen Winkel lotrecht zum gewünschten Aufbringwinkel der Abschnitte auf dem Träger bildet;
● der Drehverteiler (6) und das Beförderungsorgan (5) mit einer gesteuerten Drehgeschwindigkeit in Drehung versetzt werden;
● die Aufnahmefläche vor dem Drehverteiler vorbeigeführt wird;
● der Draht mit einer gesteuerten linearen Geschwindigkeit in das Beförderungsorgan (5) eingeführt wird, indem er in den rohrförmigen Teil (53) eingefädelt wird;
● ein Messer (7) in dem Zwischenraum zwischen dem rohrförmigen Teil (53) und dem Verteiler (6) derart wirkt, dass das Messer es ermöglicht, einen Drahtabschnitt (10) zu entnehmen, wobei der Abschnitt von dem mindestens einen Umlenkblech (61) bis zur Aufnahmefläche geführt und dort aufgebracht wird.

2. Verfahren nach Anspruch 1, bei dem die Drehachse des Drehverteilers außerhalb von und gegenüber der Aufnahmefläche positioniert ist.

3. Verfahren nach Anspruch 2, bei dem die Aufnahmefläche eine drehsymmetrische Fläche ist.

4. Verfahren nach Anspruch 1, bei dem das Umlenkblech ein Knierohr (61) ist.

5. Verfahren nach Anspruch 1, bei dem das Beförderungsorgan und der Verteiler gekoppelt sind, wobei das Messer während des Schneidens unbeweglich gehalten wird.

6. Verfahren nach Anspruch 1, bei dem das Messer bei jeder Drehung des Drehverteilers einen Drahtabschnitt abnimmt.

7. Verfahren nach einem der Ansprüche 3 bis 6, das verwendet wird, um eine Verstärkung bei der Herstellung eines Luftreifens herzustellen, der progressiv auf dem Träger aufgebaut wird, wobei dieser um eine Achse drehbar montiert ist, indem die verschiedenen Bestandteile des Luftreifens in der für die Architektur des Luftreifens erforderlichen Reihenfolge und Anordnung gestapelt werden.

8. Verfahren nach Anspruch 7, das zur Herstellung einer Verstärkung verwendet wird, die sich in einer Flanke des Luftreifens befindet.

9. Verfahren nach Anspruch 7, das zur Herstellung einer Verstärkung verwendet wird, die sich im Wulst des Luftreifens befindet.

10. Verfahren nach einem der Ansprüche 7 bis 9, bei dem der Träger im Wesentlichen eine Torusform hat, mit einem Aussehen nahe dem des Innenhohlraums des Luftreifens.

11. Verfahren nach einem der Ansprüche 1 bis 10, **dadurch gekennzeichnet, dass** die Länge der Abschnitte geregelt wird, indem die dem Draht verliehene lineare Geschwindigkeit dementsprechend angepasst wird.

12. Vorrichtung zur Herstellung einer Verstärkung auf der Basis von Abschnitten (10) eines Verstärkungsdrahts (1), die dazu bestimmt sind, auf eine Aufnahmefläche aufgebracht zu werden, wobei die Vorrichtung aufweist:
● einen Drehverteiler (6), der sich um eine Drehachse (R) dreht, wobei der Drehverteiler mindestens ein Umlenkblech (61) aufweist, wobei das Umlenkblech einen Aufnahmegang für den Draht auf der radial inneren Seite bildet und eine Führung am Ausgang auf der radial äußeren Seite bildet;
● ein Organ (5) zur Beförderung zum Verteiler, wobei das Beförderungsorgan drehbar ist und einen rohrförmigen Endteil (53) im Wesentlichen lotrecht zur Drehachse (R) des Drehverteilers aufweist, wobei ein Zwischenraum in radialer Richtung zwischen dem rohrförmigen Endteil (53) und dem Drehverteiler angeordnet ist;
● ein Messer (7), das in dem Zwischenraum zwischen dem Drehverteiler und dem Beförderungsorgan angeordnet ist.

13. Vorrichtung nach Anspruch 12, bei der das Beförderungsorgan und der Verteiler gekoppelt sind, wobei das Messer (7) auf einen drehbaren Messerträger (70) zu Einstellzwecken montiert ist und dessen Drehung während des Schnitts blockiert werden kann.

14. Vorrichtung nach Anspruch 12 oder 13, bei der das Umlenkblech ein Knierohr (61) ist.

15. Vorrichtung nach einem der Ansprüche 12 oder 13, bei der der Drehverteiler ein zentrales Rohr (51) aufweist, von dem eine Eingangsöffnung (52) im Wesentlichen auf der Drehachse (R) des Drehverteilers angeordnet ist, wobei der rohrförmige Teil (53) das zentrale Rohr (51) verlängert.

16. Vorrichtung nach einem der Ansprüche 12 bis 15, die einen Applikator aufweist, der fest mit dem Drehverteiler (6) verbunden ist.

17. Vorrichtung nach Anspruch 16, bei der der Applikator am Ende eines Arms (63) montiert ist, der selbst an einem Gabelkopf (65) angelenkt ist, der fest mit dem Drehverteiler verbunden ist.

18. Vorrichtung nach Anspruch 16 oder 17, bei der der Applikator eine drehbare Laufrolle (62) ist.

19. Vorrichtung nach einem der Ansprüche 16 bis 17, bei der eine Feder (66) die Tendenz hat, den Applikator vom Drehverteiler zu entfernen.

20. Vorrichtung nach Anspruch 15, bei der das zentrale Rohr (51) im Inneren einer drehbaren Scheibe (50) angeordnet ist, die um die Drehachse (R) dreht.
